# EUROPÄISCHE PATENTSCHRIFT

(11) **EP 0 969 469 B1**
(45) Veröffentlichungstag und Bekanntmachung des Hinweises auf die Patenterteilung: **05.06.2002**
(21) Anmeldenummer: 98112302.9
(22) Anmeldetag: 02.07.1998
(51) Int. Cl.: G11B 27/00, G11B 27/031, G11B 27/34, G07F 17/16, H04H 1/02, G06F 17/60

(54) **Music Browser**
Music browser
Browser de musique

(43) Veröffentlichungstag der Anmeldung: 05.01.2000
(73) Patentinhaber: Sonopress Produktionsgesellschaft für Ton- und Informationsträger mbH, 33311 Gütersloh (DE)
(72) Erfinder: Herpers, York Patrick, 33334 Gütersloh (DE); Müller, Andreas, 33330 Gütersloh (DE); Redder-Pohlmann, Artur, 33378 Rheda-Wiedenbrück (DE)
(74) Vertreter: Prietsch, Reiner, Dipl.-Ing.

(56) Entgegenhaltungen:
- EP-A- 0 649 121
- WO-A-93/18465
- WO-A-94/15416
- WO-A-95/30212
- WO-A-96/12258
- WO-A-96/42074
- WO-A-97/09801
- WO-A-97/35311
- WO-A-97/37332
- FR-A- 2 602 352

## Beschreibung

Die Erfindung betrifft ein Verfahren zum Bereitstellen von Musikstücken für einen Nutzer.

Derzeit werden einem Nutzer/Kunden Musikstücke meist in Form von CDs oder anderen Tonträgern angeboten. Dabei haben Händler angesichts der beträchtlichen Anzahl an veröffentlichten Tonträgern das Problem, einem Nutzer/Kunden eine hinreichend große Auswahl an Musikstücken anzubieten, zu präsentieren und auch schmackhaft zu machen. Dies ist aber unbedingt erforderlich, um konkurenzfähig zu sein. Für den Nutzer/Kunden stellt sich das Problem, daß es äußerst schwierig ist, innerhalb eines angemessenen Zeitraums einen Überblick über die am Markt erhältlichen und ihn auch noch interessierenden Tonträger zu erhalten, da es sehr zeitaufwendig ist, jeden Tonträger einzeln zu prüfen. Möchte der Nutzer/Kunde zudem auf einem Tonträger enthaltene Musikstücke probehören, muß er dazu üblicherweise ein in vielen Läden eigens dafür bereitgestelltes lokales Abspielgerät aufsuchen und betätigen.

Aus der WO 93/18465 sind ein Verfahren und eine Anlage bekannt, deren Ziel es ist, dem Nutzer das Abspielen von Musikstücken in der gleichen Weise wie eine konventionelle Juke-box zu ermöglichen, jedoch den bisher erheblichen Aufwand zu verringern, den der Betreiber der Juke-box hatte, um deren Inhalt, also einen begrenzten Vorrat an Tonträgern, zu aktualisieren. Erreicht wird dieses Ziel durch einen an die Stelle der konventionellen Jukebox tretenden Computer, in dessen Speicher digitalisierte Musikstücke geladen werden und der über aufwendige Audiowiedergabeeinrichtungen verfügt. Der Speicherinhalt dieses Computers kann drahtgebunden oder drahtlos über einen Hostcomputer aktualisiert werden, der zentrale Eingabegeräte für neue Musikstücke sowie einen zentralen Massenspeicher umfaßt und die Kommunikation mit dem die Juke-box verkörpernden, lokalen Computer steuert bzw. verwaltet. Der Nutzer kommuniziert ausschließlich mit dem lokalen Computer, aus dessen Katalog er unter einer begrenzten Anzahl von Titeln, nämlich nur denjenigen, die der Betreiber als "aktuell" erachtet, auswählen und die er nach Entrichtung des fälligen Entgeltes abspielen kann. Diese Konfiguration erfordert lokal einen großen Aufwand an Hardware und Software, stellt aber dem Nutzer trotzdem nur einen lokalen, begrenzten Titelvorrat zur Verfügung, der außerdem vom Betreiber bei Bedarf aktualisiert werden muß.

Die Erfindung hat die Aufgabe ein Verfahren zum Bereitstellen von Musikstücken für einen Nutzer zu schaffen, das ermöglicht, ohne große Vorbereitungszeit gewählte Musiktitel an einem lokalen Ausgabegerät abzuspielen, und insbesondere Händlern ermöglicht, nur eine begrenzte Anzahl an Tonträgern vorzuhalten und trotzdem konkurenzfähig zu sein.

Die Aufgabe wird erfindungsgemäß gelöst durch ein Verfahren zum Bereitstellen von Musikstücken für einen Nutzer mit einer Anlage, die mindestens besteht aus mindestens einer Einspielstation und einem Datenarchiv, das eine mit einer Track-Verwaltungsapplikation ausgestattete Anwenderumgebung aufweist und über mindestens eine Import-Schnittstelle mit der Einspielstation und über mindestens eine Export-Schnittstelle mit mindestens einem Server verbunden ist, umfassend mindestens folgende Schritte:
a) an der Einspielstation wird für jedes Musikstück jeweils eine spezifische Daten des Musikstücks enthaltende Referenzdatei eingegeben;
b) die Musikstücke werden eingelesen;
c) die eingelesenen Musikstücke werden unter Erstellung von Ausschnitten, sogenannten Hooks, bearbeitet, in ein für das weitere Verfahren erforderliches Datenformat gebracht und jeweils in einer der jeweiligen Referenzdatei zuordenbaren Mediendatei abgelegt;
d) die Referenzdateien und die Mediendateien werden über die Import-Schnittstelle in das Datenarchiv überspielt;
e) der Inhalt der Referenzdateien wird in Feldern des Datenarchivs abgelegt;
f) mittels der Track-Verwaltungsapplikation wird festgelegt, welche Mediendateien und zugehörige Felder des Datenarchivs auf dem Server bereitgestellt werden;
g) die ausgewählten Mediendateien und ihre zugehörigen Felder des Datenarchivs werden über die Export-Schnittstelle auf den Server überspielt;
h) eine auf dem Server abgelegte Mediendatei und die zugehörigen Felder des Datenarchivs werden auf Anforderung an einem lokalen Ausgabegerät bereitgestellt;
i) mittels einer Anwendersoftware wird das in der bereitgestellten Mediendatei enthaltene Musikstück an dem lokalen Ausgabegerät abgespielt.

Der Kern der Erfindung besteht mithin darin, daß bei Anwendung dieses Verfahrens ein Nutzer aus einer Vielzahl von Musikstücken, die, nachdem sie vom Datenarchiv auf den Server überspielt wurden, auf dem Server vorgehalten werden, bestimmte Titel auswählen kann. Die ausgewählten Titel werden dann mittels einer geeigneten Software ohne weitere Eingaben, d.h. ohne weiteren Aufwand, an einem lokalen Ausgabegerät abgespielt. Somit werden dem Nutzer nach einfacher Eingabe bestimmter Auswahlkriterien am Ausgabegerät die entsprechend am Server verfügbaren Titel bereitgestellt, ohne daß hierzu zeitaufwendige Maßnahmen erforderlich sind. Durch Verwendung einer das Verfahren nutzenden Anlage entfallen für einen Händler bisher wichtige Serviceleistungen wie das Bereitstellen von Abspielstationen für vorgehaltene Tonträger und läßt sich die Anzahl der vorgehaltenen Tonträger beträchtlich reduzieren bzw. gut den tatsächlichen Marktbedürfnissen anpassen, da vom Kunden am Ausgabegerät gewählte Titel die statistische Grundlage für einen geeigneten Lagerbestand bilden können. Auch können dem Nutzer durch Anwendung des Verfahrens wichtige, den jeweiligen Musiktitel betreffende Informationen zur Verfügung gestellt werden. Diese sind in den Feldern des Datenarchivs enthalten und können z.B. EAN-Code, Bestellnummer, Labelcode, Namen der Interpreten, der Einzeltracktitel, des Titels der CD, etc. sein. Das Datenarchiv sollte eine hinreichende Speicherkapazität aufweisen, so daß auch zukünftig veröffentlichte Musiktitel aufgenommen werden können. Besonders eignet sich die von der Anmelderin entwickelte DMMS-Datenbank (DMMS = Digital Media Management System), die eine Speicherkapazität hat, die ungefähr 200000 Musik-CDs entspricht.

Der Betreiber der Anlage trifft eine Auswahl aus den in dem Datenarchiv abgelegten Musikstücken hinsichtlich der Musikstücke, die auf dem Server für den Nutzer bereitgestellt werden. Die Anzahl der für den Nutzer verfügbaren Musiktitel ist natürlich durch die Speicherkapazität des Servers begrenzt.

Jede von der oben angeführten abweichende, sinnvolle Verfahrensschrittreihenfolge ist natürlich auch anwendbar.

Bedeutsam ist es auch, daß der Nutzer am lokalen Ausgabegerät über eine Anwendersoftware verfügt, die geeignet ist, die Mediendateien und auch die Felder des Datenarchivs so zu verarbeiten, daß der Nutzer die Musikstücke zumindest probehören kann.

Einer Referenzdatei kann eine weitere Mediendatei zugeordnet werden, die zumindest Teile eines Musik-Videos enthält (Anspruch 2). Dies ist insofern bedeutsam, als Musik-Videos heutzutage ein nahezu eigenständiges Transportmedium für Musik sind und sich gerade bei jüngeren Nutzern zunehmender Beliebtheit erfreuen. Solche Mediendateien werden genauso wie nur Musik enthaltende Mediendateien verarbeitet, mit dem Unterschied, daß dem Nutzer am Ausgabegerät eine audiovisuelle Darstellungsform zur Verfügung steht und am Ausgabegerät eine diese Darstellung ermöglichende Software verfügbar sein muß.

Zweckmäßig wird mindestens einer Referenzdatei eine Textdatei zugeordnet, die Informationen zu dem mit dieser Referenzdatei verknüpften Musikstück enthält (Anspruch 3). Diese Textdatei kann Hintergrundinformationen zu dem Interpreten oder dem Label oder auch andere für den Nutzer nützliche Zusatzinformationen, wie beispielsweise Hinweise auf Konzertveranstaltungen, enthalten.

Darüberhinaus kann mindestens einer Referenzdatei eine Mediendatei zugeordnet werden, die Animationen enthält (Anspruch 4). Diese Animationen können der zusätzlichen Unterhaltung des Nutzers dienen.

Mediendateien und Textdateien können natürlich auch nachträglich, d.h. wenn die Referenzdateien schon in das Datenarchiv überspielt sind und deren Inhalt in Feldern des Datenarchivs abgelegt ist, in den auf dem Datenarchiv abgelegten Datenbestand aufgenommen werden. Dann werden diese Dateien bestimmten Feldern des DAtenarchivs und nicht den Referenzdateien zugeordnet.

Zweckmäßig können die Mediendateien zumindest teilweise in komprimierter Form in dem Datenarchiv abgelegt werden (Anspruch 5).

Um dem Nutzer sämtliche auf einem Tonträger enthaltenen Titel zur Verfügung zu stellen, können an der Einspielstation die auf einem Tonträger, vorzugsweise einer CD, enthaltenen Musikstücke eingespielt werden (Anspruch 6).

Um alle zu einem Tonträger gehörenden Mediendateien zu verknüpfen, können diese in einer Textdatei referenziert werden (Anspruch 7).

Zur eindeutigen Identifizierung wird jeder Mediendatei zweckmäßig die Nummer des Ausgangstonträgers und eine Tracknummer zugewiesen (Anspruch 8).

Um zu gewährleisten, daß die Mediendateien nur mit einer autorisierten Anwendersoftware verarbeitet werden, werden diese zweckmäßig mit einem Verschlüsselungscode versehen (Anspruch 9).

Um den Nutzer mit weiteren optischen Eindrücken versorgen zu können, kann an der Einspielstation eine Graphik eingescannt und einer Referenzdatei zugeordnet werden (Anspruch 10). Diese Graphik kann beispielsweise die Frontseite des zugehörigen CD-Booklets sein. Die Graphik kann auch Feldern des Datenarchivs zugeordnet werden.

Zweckmäßig werden an dem lokalen Ausgabegerät einem Musikstück zugeordnete Text- und/oder Videodaten dargestellt (Anspruch 11). Natürlich können an dem Ausgabegerät auch Text- und/oder Videodaten dargestellt werden, die mit dem angeforderten Musikstück nicht in Verbindung stehen. Dies kann beispielsweise Werbung sein.

Auf dem Server kann mittels anpaßbarer Vorlagen (Templates) und einer korrespondierenden Administrationsoberfläche für jede ein Musikstück enthaltende Mediendatei eine graphische Darstellung generiert und dem Nutzer zur Verfügung gestellt werden (Anspruch 12).

Um alle auf dem Server abgelegten Dateien schnell für den Nutzer bereitstellen zu können, wird zweckmäßig auf dem Server beim Import von einem Musikstück zugeordneten Dateien ein Search-Index erstellt oder modifiziert (Anspruch 13).

Zweckmäßig wird der Server mittels einer Last- und/oder Verfügbarkeitsüberwachung kontrolliert. (Anspruch 14).

Damit einem Nutzer die Gelegenheit gegeben wird, sich mit anderen Nutzern der Anlage zu verständigen, kann das Ausgabegerät mit einem Chat-Server verbunden werden (Anspruch 15).

Um Musikstücke und damit verknüpfte Dateien einem Nutzer auch längerfristig zur Verfügung zu stellen, können die einem Musikstück zugeordneten Dateien auf dem Ausgabegerät lokal abgelegt werden (Anspruch 16). Denkbar ist natürlich auch, daß der Nutzer sich einzelne Musikstücke auf sein Ausgabegerät und ggf. nachgeschaltete Verarbeitungsgeräte, wie einen "CD-Brenner", überspielt und weiterverarbeitet. Der Nutzer kann so z.B. Musik-CDs selbst herstellen.

Um die Anlage gegen unbefugte Benutzung zu schützen, kann für jeden Nutzer ein Code vergeben werden (Anspruch 17).

Die Dateien können dem Nutzer online zur Verfügung gestellt werden (Anspruch 18). Dies geschieht bevorzugt über Netzwerke (Anspruch 19). Das Netzwerk kann natürlich auch das Internet sein.

Nach einer besonderen Ausführungsform des erfindungsgemäßen Verfahrens werden die Dateien dem Nutzer auf einem Datenträger, vorzugsweise einer DVD, zur Verfügung gestellt (Anspruch 20). Dies ist die sog. Offline-Version des Verfahrens.

Möglich ist auch eine sogenannte Hybrid-Version, bei der die Dateien dem Nutzer teilweise über Netzwerke und teilweise auf einem Datenträger, vorzugsweise einer DVD, zur Verfügung gestellt werden (Anspruch 21). Zweckmäßig sind dann die speicherintensiven Dateien, nämlich die Mediendateien, auf dem Datenträger gespeichert, während kleine schnell übertragbare Dateien wie Textdateien über ein Netzwerk zur Verfügung gestellt werden.

Um dem Nutzer die Bedienung des Ausgabegeräts zu erleichtern, wird vorteilhaft auf einem Bildschirm eine Suchmaske dargestellt (Anspruch 22).

Auf einem Bildschirm des Ausgabegerätes kann eine auf der Suchmaskeneingabe basierende Ergebnisseite angezeigt werden (Anspruch 23).

Nach einer speziellen Ausführungsform können an dem Ausgabegerät mittels eines Zufallgenerators aus den auf dem Server abgelegten Musikstücken ausgewählte Musikstücke abgespielt werden (Anspruch 24). Dabei kann es sich beispielsweise um ein Medley eines bestimmten Interprets oder auch um einen Auszug aus den aktuellen Charts handeln.

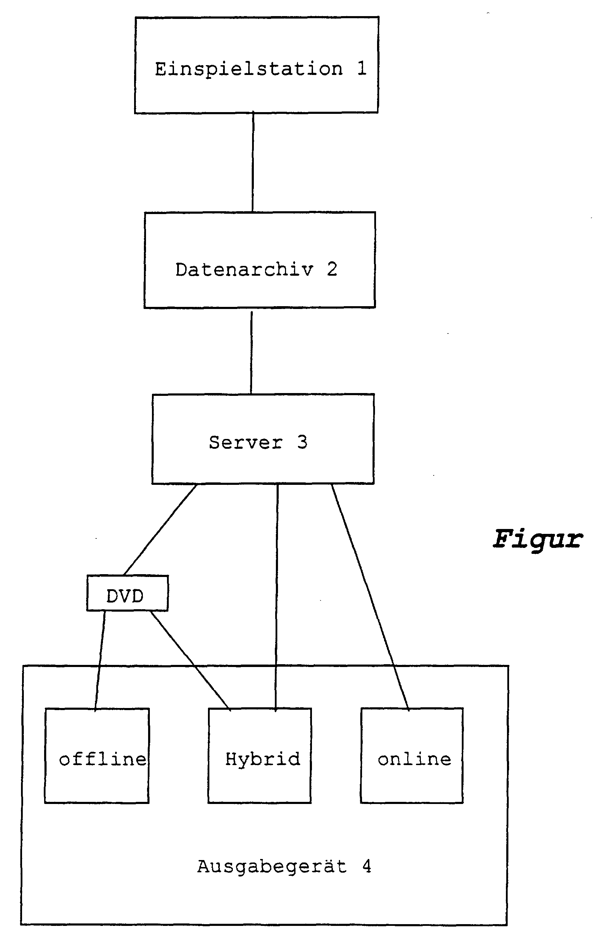

Ein Ausführungsbeispiel nach der Erfindung wird anhand der Zeichnung schematisch vereinfacht erläutert.

Die einzige Figur zeigt den Aufbau einer erfindungsgemäßen Anlage.

In der Zeichnung sind drei verschiedene Ausführungsformen der Anlage zusammengefaßt, und zwar die sog. Online-Version, die sog. Hybrid-Version und die sog. Offline-Version. Prinzipiell besteht die Anlage aus einer Einspielstation 1, einem Datenarchiv 2, einem Server 3 und einem Ausgabegerät 4. Die Einspielstation 1 und das Datenarchiv 2, das Datenarchiv 2 und der Server 3 sowie der Server 3 und das Ausgabegerät 4 sind jeweils über Datenleitungen miteinander verbunden. Bei der Offline-Version entfallen die Datenleitungen zwischen dem Server 3 und dem Ausgabegerät 4. Der Datentransfer zur Abspielstation 4 erfolgt hier mittels eines Datenträgers, beispielsweise einer DVD, der am Server 3 mit den Daten/Dateien beschrieben wird, die für den Nutzer/Verbraucher am Ausgabegerät 4 verfügbar sein müssen. Selbstverständlich muß das Ausgabegerät 4 dann über eine entsprechende Leseeinheit für diesen Datenträger verfügen. Auch bei Anwendung der Hybrid-Version, nach der Teile der Daten auf einem Datenträger und Teile der Daten über ein Netzwerk zur Verfügung am Ausgabegerät 4 gestellt werden, muß das Ausgabegerät 4 über eine entsprechende Leseeinheit verfügen.

Die Einspielstation 1 kann aus mehreren Einzelstationen bestehen und verfügt über mindestens ein Rechnersystem, auf dem ein sog. Redaktionssystem zur Eingabe von Referenzdateien installiert ist. Mittels der Referenzdateien ist eine eindeutige Zuordnung von mit einem Musikstück verküpften Dateien möglich. Die Referenzdateien enthalten zudem z.B. EAN-Code, Bestellnummer, Labelcode, Namen der Interpreten, Einzeltrack-Titel, Titel der CD, usw.. Die Einspielstation kann des weiteren über mindestens einen Scanner verfügen, an dem beispielsweise die Titelseite des CD-Booklets eingescannt wird. Das Rechnersystem ist mit einer Einspielautomatik ausgestattet, mittels der die auf einem Tonträger enthaltenen Musikstücke eingelesen werden. Mittels eines Anwendungsprogramms werden die eingespielten Musikstücke bearbeitet. Beispielsweise können Ausschnitte (sog. Hooks) aller auf der CD enthaltenen Musikstücke automatisch erstellt werden. Diese Hooks können beispielsweise eine Länge von 30 sec. haben. Die eingelesenen Musikstücke werden zudem in ein für das weitere Verfahren erforderliches Datenformat gebracht und jeweils in einer der jeweiliegen Referenzdatei zuordenbaren Mediendatei abgelegt.

Die an der Einspielstation 1 generierten Dateien werden dann in das Datenarchiv 2 überspielt. Die Inhalte der Referenzdateien werden in Feldern des Datenarchivs abgelegt. Das Datenarchiv 2 kann beispielsweise eine Oracle-Datenbank einer DMMS-Masterdatenbank sein (DMMS=Digital Media Management System). Die Anwendungsumgebung des Datenarchivs 2 ist mit einer Trackverwaltungsapplikation ausgestattet. Dies erlaubt eine komfortable Handhabung der einzelnen, den Musikstücken zugeordneten Dateien.

Das Datenarchiv 2 hat eine Exportschnittstelle, über die mittels der Trackverwaltungsapplikation ausgewählte Musikstücke, d.h. Mediendateien und jeweilige Felder des Datenarchivs, auf den Server 3 übertragen werden.

Der Server 3 ist je nach ausgewählter Ausführungsform unterschiedlich ausgelegt. Fungiert er als Internet- oder Online-Server, besteht er aus einem Datenbankserver und einem Medienfileserver, auf dem die Medienfiles bevorzugt in einem kompremierten Format abgelegt sind. Auf dem Datenbankserver sind die den Medienfiles jeweils zuordbaren Felder des Datenarchivs abgelegt. Die Hybrid-Version besteht nur aus einem Server, auf dem die Felder des Datenrachivs abgelegt sind. Die Mediendateien befinden sich auf einem Datenträger wie einer DVD. Bei der Offline-Version des Verfahrens werden am Server Datenträger, wie z.B. eine DVD, bespielt. Der Datenträgerinhalt ist zweckmäßig auf die spezifischen Anforderungen des Nutzers zugeschnitten. Beispielsweise sind nur Musikstücke aus dem Jazz- oder aus dem Klassikbereich enthalten. Natürlich kann auch bei den anderen Ausführungsformen eine Vorauswahl hinsichtlich der am Server 3 bereitgestellten Musikstücke getroffen werden.

Vorteilhaft sind die auf dem Datenträger enthaltenen Mediendateien verschlüsselt; beispielsweise liegen sie im MPEG-Format vor und sind mittels der MMP-Technologie (MMP=Multi-Media-Protection) verschlüsselt. So ist gewährleistet, daß die Mediendateien nur von befugten Nutzern verwertet werden können. Der Nutzer muß dann am Ausgabegerät über eine autorisierte Software verfügen. Eine Raubkopie des Datenträgers ist dann von anderen Ausgabegeräten nicht lesbar.

Bei der Hybridversion sind auf dem Datenträger nur Mediendateien enthalten. Die benötigten Felder des Datenarchivs werden über ein Netzwerk an das Ausgabegerät 4 überspielt. Dies ermöglicht einen schnellen Zugriff auf die speicherintensiven Mediendateien sowie das Bereitstellen der Musikstücke in hoher Qualität. Bei der Offline-Version sind sowohl die Mediendateien als auch die zugehörigen Felder des Datenarchivs auf der DVD enthalten. Jedoch ist sowohl bei der Offline-Version als auch bei der Hybrid-Version eine ständige Aktualisierung der auf dem Datenträger enthaltenen Dateien erforderlich.

Die Online-Version kann auch als sog. Kiosksystem ausgebildet sein, mit dem der Nutzer direkt Bestellungen bestimmter CDs durchführen kann, die ihm dann beispielsweise zugeschickt werden. Die Zahlung kann beispielsweise mittels Eingabe einer Kreditkartennummer erfolgen.

Vorteilhaft können an der Einspielstation einer bestimmten Referenzdatei weitere Mediendateien zugeordnet werden, die Musikvideos oder andere graphische Darstellungen enthalten. Eine ein Musikvideo enthaltende Mediendatei wird genauso behandelt wie eine nur ein Musikstück enthaltende Mediendatei, d.h. sie wird auf dem Datenarchiv abgelegt, auf den Server überspielt, auf das Ausgabegerät übertragen und dort mittels einer geeigneten Software abgespielt.

Des weiteren können an der Einspielstation einer Referenzdatei weitere Textdateien zugeordnet werden, die ebenfalls in dem Datenarchiv und auf dem Server abgelegt und auf das Ausgabegerät übertragen werden können, um dort dem Nutzer zur Verfügung zu stehen. Diese Textdateien können z.B. Informationen zu dem/den Interpreten, Verweise auf weitere Veröffentlichungen oder Konzertveranstaltungen, usw. enthalten.

Die Text- und Mediendateien können auch direkt bestimmten Feldern des Datenarchivs zugeordnet werden.

## Patentansprüche

1. Verfahren zum Bereitstellen von Musikstücken für einen Nutzer mit einer Anlage, die mindestens besteht aus mindestens einer Einspielstation (1) und einem Datenarchiv (2), das eine mit einer Track-Verwaltungsapplikation ausgestattete Anwenderumgebung aufweist und über mindestens eine Import-Schnittstelle mit der Einspielstation (1) und über mindestens eine Export-Schnittstelle mit mindestens einem Server (3) verbunden ist, umfassend mindestens folgende Schritte:
a) an der Einspielstation (1) wird für jedes Musikstück jeweils eine spezifische Daten des Musikstücks enthaltende Referenzdatei eingegeben;
b) die Musikstücke werden eingelesen;
c) die eingelesenen Musikstücke werden unter Erstellung von Ausschnitten, sogenannten Hooks, bearbeitet, in ein für das weitere Verfahren erforderliches Datenformat gebracht und jeweils in einer der jeweiligen Referenzdatei zuordenbaren Mediendatei abgelegt;
d) die Referenzdateien und die Mediendateien werden über die Import-Schnittstelle in das Datenarchiv (2) überspielt;
e) der Inhalt der Referenzdateien wird in Feldern des Datenarchivs (2) abgelegt;
f) mittels der Track-Verwaltungsapplikation wird festgelegt, welche Mediendateien und zugehörige Felder des Datenarchivs auf dem Server (3) bereitgestellt werden;
g) die ausgewählten Mediendateien und ihre zugehörigen Felder des Datenarchivs werden über die Export-Schnittstelle auf den Server (3) überspielt;
h) eine auf dem Server (3) abgelegte Mediendatei und die zugehörigen Felder des Datenarchivs werden auf Anforderung an einem lokalen Ausgabegerät (4) bereitgestellt;
i) mittels einer Anwendersoftware wird das in der bereitgestellten Mediendatei enthaltene Musikstück an dem lokalen Ausgabegerät (4) abgespielt.

2. Verfahren nach Anspruch 1, **dadurch gekennzeichnet, daß** mindestens einer Referenzdatei eine weitere Mediendatei zugeordnet wird, die zumindest Teile eines Musik-Videos enthält.

3. Verfahren nach Anspruch 1 oder 2, **dadurch gekennzeichnet, daß** mindestens einer Referenzdatei eine Textdatei zugeordnet wird, die Informationen zu dem mit dieser Referenzdatei verknüpften Musikstück enthält.

4. Verfahren nach einem der Ansprüche 1 bis 3, **dadurch gekennzeichnet, daß** mindestens einer Referenzdatei eine Mediendatei zugeordnet wird, die Animationen enthält.

5. Verfahren nach einem der Ansprüche 1 bis 4, **dadurch gekennzeichnet, daß** die Mediendatei zumindest teilweise in komprimierter Form in dem Datenarchiv abgelegt werden.

6. Verfahren nach einem der Ansprüche 1 bis 5, **dadurch gekennzeichnet, daß** an der Einspielstation (1) die auf einem Tonträger, vorzugsweise einer CD, enthaltenen Musikstücke eingespielt werden.

7. Verfahren nach einem der Ansprüche 1 bis 6, **dadurch gekennzeichnet, daß** alle zu einem Tonträger gehörenden Mediendateien in einer Textdatei referenziert werden.

8. Verfahren nach einem der Ansprüche 1 bis 7, **dadurch gekennzeichnet, daß** jeder Mediendatei die Nummer des Ausgangstonträgers und eine Tracknummer zugewiesen werden.

9. Verfahren nach einem der Ansprüche 1 bis 8, **dadurch gekennzeichnet, daß** die Mediendateien mit einem Verschlüsselungscode versehen werden.

10. Verfahren nach einem der Ansprüche 1 bis 9, **dadurch gekennzeichnet, daß** an der Einspielstation (1) eine Graphik eingescannt und einer Referenzdatei zugeordnet wird.

11. Verfahren nach einem der Ansprüche 2 bis 10, **dadurch gekennzeichnet, daß** an dem lokalen Ausgabegerät (4) einem Musikstück zugeordnete Text- und/oder Videodaten dargestellt werden.

12. Verfahren nach einem der Ansprüche 1 bis 11, **dadurch gekennzeichnet, daß** auf dem Server (3) mittels anpaßbarer Vorlagen (Templates) und einer korrespondierenden Administrationsoberfläche für jede ein Musikstück enthaltende Mediendatei eine graphische Darstellung generiert und dem Nutzer zur Verfügung gestellt wird.

13. Verfahren nach einem der Ansprüche 1 bis 12, **dadurch gekennzeichnet, daß** auf dem Server (3) beim Import von einem Musikstück zugeordneten Dateien ein Search-Index erstellt oder modifiziert wird.

14. Verfahren nach einem der Ansprüche 1 bis 13, **dadurch gekennzeichnet, daß** der Server (3) mittels einer Lastund/oder Verfügbarkeitsüberwachung kontrolliert wird.

15. Verfahren nach einem der Ansprüche 1 bis 14, **dadurch gekennzeichnet, daß** das Ausgabegerät (4) mit einem Chat-Server verbunden wird.

16. Verfahren nach einem der Ansprüche 1 bis 15, **dadurch gekennzeichnet, daß** die einem Musikstück zugeordneten Dateien auf dem Ausgabegerät (4) lokal abgelegt werden.

17. Verfahren nach einem der Ansprüche 1 bis 16, **dadurch gekennzeichnet, daß** für einen Nutzer ein Code vergeben wird.

18. Verfahren nach einem der Ansprüche 1 bis 17, **dadurch gekennzeichnet, daß** die Dateien dem Nutzer online zur Verfügung gestellt werden.

19. Verfahren nach Anspruch 18, **dadurch gekennzeichnet, daß** die Dateien dem Nutzer über Netzwerke zur Verfügung gestellt werden.

20. Verfahren nach einem der Ansprüche 1 bis 17, **dadurch gekennzeichnet, daß** die Dateien dem Nutzer auf einem Datenträger, vorzugsweise einer DVD, zur Verfügung gestellt werden.

21. Verfahren nach einem der Ansprüche 1 bis 17, **dadurch gekennzeichnet, daß** die Dateien dem Nutzer teilweise online und teilweise auf einem Datenträger, vorzugsweise einer DVD, zur Verfügung gestellt werden.

22. Verfahren nach einem der Ansprüche 1 bis 21, **dadurch gekennzeichnet, daß** auf einem Bildschirm des Ausgabegeräts eine Suchmaske dargestellt wird.

23. Verfahren nach Anspruch 22, **dadurch gekennzeichnet, daß** auf einem Bildschirm des Ausgabegerätes (4) eine auf der Suchmaskeneingabe basierende Ergebnisseite angezeigt wird.

24. Verfahren nach einem der Ansprüche 1 bis 23, **dadurch gekennzeichnet, daß** an dem Ausgabegerät (4) mittels eines Zufallgenerators aus den auf dem Server (3) abgelegten Musikstücken ausgewählte Musikstücke abgespielt werden.

25. Anlage zum Bereitstellen von Musikstücken für einen Nutzer, mit Mitteln zur Durchführung der Verfahrensschritte nach einem der Ansprüche 1 bis 24, mindestens bestehend aus mindestens einer Einspielstation (1), einem Datenarchiv (2), das eine mit einer Track-Verwaltungsapplikation ausgestattete Anwenderumgebung aufweist.und über mindestens eine Import-Schnittstelle mit der Einspielstation (1) und über mindestens eine Export-Schnittstelle mit mindestens einem Server (3) verbunden ist, und einem Ausgabegerät (4).

26. Anlage nach Anspruch 25, **dadurch gekennzeichnet, daß** der Server online mit dem Ausgabegerät (4) in Verbindung steht.

27. Anlage nach Anspruch 25 oder 26, **dadurch gekennzeichnet, daß** der Server (3) über eine Software zum Erstellen einer graphischen Darstellung für jedes Musikstück verfügt.

28. Anlage nach einem der Ansprüche 25 bis 27, **dadurch gekennzeichnet, daß** der Server (3) über eine Last- und Verfügbarkeitsüberwachung verfügt.

29. Anlage nach einem der Ansprüche 25 bis 28, **dadurch gekennzeichnet, daß** das Ausgabegerät (4) ein DVD-Laufwerk hat.

## Claims

1. A process for providing pieces of music for a user with an installation which at least comprises at least one recording station (1) and a data archive (2) which has a user environment provided with a track management application and is connected by way of at least one import interface to the recording station (1) and by way of at least one export interface to at least one server (3), including at least the following steps:
a) at the recording station (1) for each piece of music a respective reference data file containing specific data of the piece of music is input;
b) the pieces of music are read in;
c) the read-in pieces of music are processed with the production of cutouts, so-called hooks, put into a data format required for the further procedure, and respectively stored in a media data file which can be associated with the respective data file;
d) the reference data files and the media data files are re-recorded by way of the import interface into the data archive (2);
e) the content of the reference data files is stored in fields of the data archive (2);
f) which media data files and associated fields of the data archive are provided on the server (3) is established by means of the track management application;
g) the selected media data files and their associated fields of the data archive are re-recorded by way of the export interface on to the server (3);
h) a media data file stored on the server (3) and the associated fields of the data archive are provided on request at a local output device (4); and
i) by means of a user software the piece of music contained in the provided media data file is played at the local output device (4).

2. A process according to claim 1 **characterised in that** associated with at least one reference data file is a further media data file which contains at least parts of a music video.

3. A process according to claim 1 or claim 2 **characterised in that** associated with at least one reference data file is a text data file which contains items of information relating to the piece of music linked to that reference data file.

4. A process according to one of claims 1 to 3 **characterised in that** associated with at least one reference data file is a media data file which includes animations.

5. A process according to one of claims 1 to 4 **characterised in that** the media data files are stored at least in part in compressed form in the data archive.

6. A process according to one of claims 1 to 5 **characterised in that** the pieces of music contained on an audio carrier, preferably a CD, are played in at the recording station (1).

7. A process according to one of claims 1 to 6 **characterised in that** all media data files belonging to an audio carrier are referenced in a text data file.

8. A process according to one of claims 1 to 7 **characterised in that** the number of the initial audio carrier and a track number are allocated to each media data file.

9. A process according to one of claims 1 to 8 **characterised in that** the media data files are provided with an encryption code.

10. A process according to one of claims 1 to 9 **characterised in that** a graphic is scanned in at the recording station (1) and associated with a reference data file.

11. A process according to one of claims 2 to 10 **characterised in that** text and/or video data associated with a piece of music are represented at the local output device (4).

12. A process according to one of claims 1 to 11 **characterised in that** a graphic representation is generated on the server (3) by means of adaptable templates and a corresponding administration surface for each media data file including a piece of music and is made available to the user.

13. A process according to one of claims 1 to 12 **characterised in that** a search index is established or modified on the server (3) upon the import of data files associated with a piece of music.

14. A process according to one of claims 1 to 13 **characterised in that** the server (3) is monitored by means of a load and/or availability monitoring procedure.

15. A process according to one of claims 1 to 14 **characterised in that** the output device (4) is connected to a chat server.

16. A process according to one of claims 1 to 15 **characterised in that** the data files associated with a piece of music are locally stored on the output device (4).

17. A process according to one of claims 1 to 16 **characterised in that** a code is given for a user.

18. A process according to one of claims 1 to 17 **characterised in that** the data files are made available to the user online.

19. A process according to claim 18 **characterised in that** the data files are made available to the user by way of networks.

20. A process according to one of claims 1 to 17 **characterised in that** the data files are made available to the user on a data carrier, preferably a DVD.

21. A process according to one of claims 1 to 17 **characterised in that** the data files are made available to the user partly online and partly on a data carrier, preferably a DVD.

22. A process according to one of claims 1 to 21 **characterised in that** a search mask is represented on a display screen of the output device.

23. A process according to claim 21 **characterised in that** a result page based on the search mask input is displayed on a display screen of the output device (4).

24. A process according to one of claims 1 to 23 **characterised in that** pieces of music selected from the pieces of music stored on the server (3) by means of a random generator are played back at the output device (4).

25. An installation for providing pieces of music for a user, comprising means for carrying out the process steps according to one of claims 1 to 24, at least comprising at least one recording station (1), a data archive (2) having a user environment provided with a track management application, and connected by way of at least one import interface to the recording station (1) and by way of at least one export interface to at least one server (3), and an output device (4).

26. An installation according to claim 25 **characterised in that** the server is connected online to the output device (4).

27. An installation according to claim 25 or claim 26 **characterised in that** the server (3) has software for producing a graphic representation for each piece of music.

28. An installation according to one of claims 25 to 27 **characterised in that** the server (3) has a load and availability monitoring means.

29. An installation according to one of claims 25 to 28 **characterised in that** the output device (4) has a DVD drive.

## Revendications

1. Procédé permettant de mettre des morceaux de musique à la disposition d'un utilisateur au moyen d'une installation comprenant au moins un poste d'acquisition (1) et une bibliothèque de données (2) présentant un environnement applicatif muni d'une application de gestion de plages et qui est reliée par au moins une interface d'importation au poste d'acquisition (1) et par au moins une interface d'exportation à au moins un serveur (3), ledit procédé comprenant les étapes suivantes :
a) au niveau du poste d'acquisition (1), un fichier de référence contenant des données spécifiques au morceau de musique est saisi pour chaque morceau de musique ;
b) les morceaux de musique sont lus pour acquisition ;
c) les morceaux de musique lus sont traités avec production d'extraits, appelés accroches, mis sous un format de données nécessaire pour la suite du procédé et stockés dans un fichier de médias pouvant être affecté à l'un des différents fichiers de référence ;
d) les fichiers de référence et les fichiers de médias sont transférés dans la bibliothèque de données (2) par l'intermédiaire de l'interface d'importation ;
e) le contenu des fichiers de référence est stocké dans des champs de la bibliothèque de données (2) ;
f) au moyen de l'application de gestion de plages, on détermine les fichiers de médias et les champs correspondants de la bibliothèque de données à mettre à disposition sur le serveur (3) ;
g) les fichiers de médias sélectionnés et les champs correspondants de la bibliothèque de données sont transférés sur le serveur (3) par le biais de l'interface d'exportation ;
h) un fichier de média stocké sur le serveur (3) et les champs correspondants de la bibliothèque de données sont mis à disposition sur demande au niveau d'un appareil de reproduction local (4) ;
i) au moyen d'un logiciel applicatif, le morceau de musique contenu dans le fichier de média mis à disposition est joué au niveau de l'appareil de reproduction local (4).

2. Procédé selon la revendication 1, **caractérisé en ce qu'**un autre fichier de média contenant au moins des parties d'un clip vidéo est affecté à au moins un fichier de référence.

3. Procédé selon la revendication 1 ou 2, **caractérisé en ce qu'**un fichier texte est affecté à au moins un fichier de référence, ce fichier texte contenant des informations sur le morceau de musique lié à ce fichier de référence.

4. Procédé selon l'une des revendications 1 à 3, **caractérisé en ce qu'**un fichier de média contenant des animations est affecté à au moins un fichier de référence.

5. Procédé selon l'une des revendications 1 à 4, **caractérisé en ce que** le fichier de média est stocké au moins en partie sous forme compressée dans la bibliothèque de données.

6. Procédé selon l'une des revendications 1 à 5, **caractérisé en ce que** les morceaux de musique contenus dans un support sonore, de préférence un CD, sont lus au niveau du poste d'acquisition (1).

7. Procédé selon l'une des revendications 1 à 6, **caractérisé en ce que** tous les fichiers de médias relatifs à un support sonore sont référencés dans un fichier texte.

8. Procédé selon l'une des revendications 1 à 7, **caractérisé en ce que** le numéro du support sonore d'origine et un numéro de plage sont assignés à chaque fichier de média.

9. Procédé selon l'une des revendications 1 à 8, **caractérisé en ce que** les fichiers de médias sont munis d'une clé de codage.

10. Procédé selon l'une des revendications 1 à 9, **caractérisé en ce qu'**un graphisme est saisi par scanner au niveau du poste d'acquisition (1) et affecté à un fichier de référence.

11. Procédé selon l'une des revendications 2 à 10, **caractérisé en ce que** des données texte et/ou vidéo affectées à un morceau de musique sont affichées au niveau de l'appareil de reproduction local (4).

12. Procédé selon l'une des revendications 1 à 11, **caractérisé en ce qu'**une représentation graphique est générée sur le serveur (3), au moyen de maquettes adaptables (gabarits) et d'une surface administrateur correspondante, pour chaque fichier de média contenant un morceau de musique et mise à la disposition de l'utilisateur.

13. Procédé selon l'une des revendications 1 à 12, **caractérisé en ce que** qu'un index de recherche est créé ou modifié sur le serveur (3) lors de l'importation de fichiers affectés à un morceau de musique.

14. Procédé selon l'une des revendications 1 à 13, **caractérisé en ce que** le serveur (3) est contrôlé au moyen d'un monitorage de la charge et/ou de la disponibilité.

15. Procédé selon l'une des revendications 1 à 14, **caractérisé en ce que** l'appareil de reproduction (4) est relié à un serveur de discussion.

16. Procédé selon l'une des revendications 1 à 15, **caractérisé en ce que** les fichiers affectés à un morceau de musique sont stockés localement au niveau de l'appareil de reproduction (4).

17. Procédé selon l'une des revendications 1 à 16, **caractérisé en ce qu'**un code est attribué pour un utilisateur.

18. Procédé selon l'une des revendications 1 à 17, **caractérisé en ce que** les fichiers sont mis à la disposition de l'utilisateur en ligne.

19. Procédé selon la revendication 18, **caractérisé en ce que** les fichiers sont mis à la disposition de l'utilisateur par l'intermédiaire de réseaux.

20. Procédé selon l'une des revendications 1 à 17, **caractérisé en ce que** les fichiers sont mis à la disposition de l'utilisateur sur un support de données, de préférence un DVD.

21. Procédé selon l'une des revendications 1 à 17, **caractérisé en ce que** les fichiers sont mis à la disposition de l'utilisateur pour partie en ligne et pour partie sur un support de données, de préférence un DVD.

22. Procédé selon l'une des revendications 1 à 21, **caractérisé en ce qu'**une grille de recherche est affichée sur un écran de l'appareil de reproduction.

23. Procédé selon la revendication 22, **caractérisé en ce qu'**une page de résultats basée sur les saisies de la grille de recherche est affichée sur un écran de l'appareil de reproduction (4).

24. Procédé selon l'une des revendications 1 à 23, **caractérisé en ce que** des morceaux de musique choisis parmi les morceaux de musique stockés sur le serveur (3) peuvent être passés au niveau de l'appareil de reproduction (4) au moyen d'un générateur aléatoire.

25. Installation permettant de mettre des morceaux de musique à la disposition d'un utilisateur, avec des moyens pour réaliser les étapes du procédé selon l'une des revendications 1 à 24, au minimum composée d'au moins un poste d'acquisition (1), d'une bibliothèque de données (2) qui présente un environnement applicatif muni d'une application de gestion de plages et qui est reliée par au moins une interface d'importation au poste d'acquisition (1) et par au moins une interface d'exportation à au moins un serveur (3), et d'un appareil de reproduction (4).

26. Installation selon la revendication 25, **caractérisée en ce que** le serveur est relié en ligne à l'appareil de reproduction (4).

27. Installation selon la revendication 25 ou 26, **caractérisée en ce que** le serveur (3) dispose d'un logiciel pour créer une représentation graphique pour chaque morceau de musique.

28. Installation selon l'une des revendications 25 à 27, **caractérisée en ce que** le serveur (3) dispose d'un monitorage de la charge et/ou de la disponibilité.

29. Installation selon l'une des revendications 25 à 28, **caractérisée en ce que** l'appareil de reproduction (4) possède un lecteur de DVD.
